(19) Europäisches Patentamt
European Patent Office
Office européen des brevets

(11) **EP 2 233 712 A1**

(12) **EUROPEAN PATENT APPLICATION**
published in accordance with Art. 153(4) EPC

(43) Date of publication:
**29.09.2010 Bulletin 2010/39**

(51) Int Cl.:
**F01N 3/08** (2006.01)   **B01D 53/94** (2006.01)
**F01N 3/24** (2006.01)   **F02D 41/04** (2006.01)

(21) Application number: **08869924.4**

(22) Date of filing: **05.11.2008**

(86) International application number:
**PCT/JP2008/070073**

(87) International publication number:
**WO 2009/087806 (16.07.2009 Gazette 2009/29)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **08.01.2008   JP 2008001694**

(71) Applicant: **Honda Motor Co., Ltd.
Minato-ku
Tokyo 107-8556 (JP)**

(72) Inventors:
• **WADA, Katsuji
Wako-shi
Saitama 351-0193 (JP)**
• **ISHIMARU, Shinya
Wako-shi
Saitama 351-0193 (JP)**
• **IWAMOTO, Jun
Wako-shi
Saitama 351-0193 (JP)**

(74) Representative: **Trossin, Hans-Jürgen et al
Weickmann & Weickmann
Postfach 860 820
81635 München (DE)**

(54) **EXHAUST PURIFICATION DEVICE FOR INTERNAL COMBUSTION ENGINE**

(57)   An exhaust purification device for an internal combustion engine can achieve high NOx purifying performance independent of operating conditions of the engine. The exhaust purification device has a NOx purification catalyst (33) mounted in an exhaust pipe (4) of the internal combustion engine, adsorbing or occluding NOx in exhaust gas when the exhaust gas air/fuel ratio is made lean, and reducing the adsorbed or occluded NOx when the exhaust gas air/fuel ratio is made rich; a fuel reformer (50) mounted separately from the exhaust pipe (4), reforming fuel to produce a reducing gas containing hydrogen and carbon monoxide, and supplying the reducing gas into that part of the exhaust pipe (4) which is located upstream of the NOx purification catalyst (33); and enriching means for enriching the exhaust gas air/fuel ratio. When one or more of operating conditions are satisfied, the enriching means enriches the air/fuel ratio of mixed gas to be combusted in the engine and causes the fuel reformer (50) to supply the reducing gas into the exhaust pipe (4) to enrich the exhaust gas air/fuel ratio.

FIG. 1

**Description**

TECHNICAL FIELD

The present invention relates to an exhaust purification device for an internal combustion engine. More specifically, it relates to an exhaust purification device for an internal combustion engine provided with a NOx purification catalyst that adsorbs or occludes NOx in exhaust, and that reduces the NOx thereby adsorbed or occluded.
In addition, in the present invention, the terminology "rich" indicates a ratio of air/fuel (hereinafter referred to as "air/fuel ratio") of fuel that is smaller than a stoichiometric air/fuel ratio, and the terminology "lean" indicates an air/fuel ratio of fuel that is larger than the above stoichiometric air/fuel ratio. Moreover, in the following explanation, a mass ratio of air and fuel in a mixed gas flowing into the engine is called an engine air/fuel ratio, and a mass ratio of air and combustible gas inside exhaust plumbing is called an exhaust air/fuel ratio.

BACKGROUND ART

Thus far, techniques have been known for purifying nitrogen oxides (hereinafter referred to as "NOx") contained in exhaust.
For example, in Patent Documents 1 and 2 and Non-patent Document 1, an exhaust purification device is shown that is provided with a NOx occlusion-reduction catalyst (hereinafter referred to as "LNT") in an exhaust channel, occludes NOx by passing exhaust through an oxidation catalyst and causing to react with an alkali metal, alkali earth metal or the like during lean operation in which the exhaust is oxygen excessive, and reduces the NOx thus occluded during rich operation in which the oxygen concentration of the exhaust is low. With this exhaust purification device, occlusion of NOx and reduction of NOx can be performed periodically by repeating lean operation and rich operation.
In addition, in Non-patent Document 2, for example, a method is shown in which NOx is adsorbed on a catalyst during lean operation in which the exhaust is oxygen excessive, then lean operation is performed and a state in which the oxygen concentration in the exhaust is low is periodically produced, while carbon monoxide is periodically synthesized and supplied, thereby periodically reducing the NOx adsorbed during lean operation.
More specifically, in the method shown in Non-patent Document 2, first, nitrogen monoxide and nitrogen dioxide existing in the exhaust is adsorbed to the catalyst during lean operation in which the exhaust is oxygen excessive, by way of the following formulas (1) to (3).

$$NO \rightarrow NO \text{ (adsorption)} \qquad (1)$$

$$2NO + O_2 \rightarrow 2NO_2 \qquad (2)$$

$$NO_2 \rightarrow NO_2 \text{ (adsorption)} \qquad (3)$$

Next, rich operation is performed while carbon monoxide is synthesized. The carbon monoxide thereby synthesized produces hydrogen by way of the water-gas shift reaction shown in the following formula (4), in a situation where the oxygen partial pressure is low.

$$CO + H_2O \rightarrow H_2 + CO_2 \qquad (4)$$

Furthermore, ammonia is produced by reacting this hydrogen with carbon monoxide in a reducing atmosphere, and this ammonia is adsorbed to the catalyst by way of the following formula (5).

$$5H_2 + 2NO \rightarrow 2NH_3 \text{ (adsorption)} + 2H_2O \qquad (5)$$

With the ammonia produced by carbon monoxide according to the above as the final reducing agent, NOx in the exhaust or NOx adsorbed to the catalyst is reduced by way of the following formulas (6) to (8).

$$4NH_3 + 4NO + O_2 \rightarrow 4N_2 + 6H_2O \qquad (6)$$

$$2NH_3 + NO_2 + NO \rightarrow 2N_2 + 3H_2O \qquad (7)$$

$$8NH_3 + 6NO_2 \rightarrow 7N_2 + 12H_2O \qquad (8)$$

Alternatively, in Patent Documents 3 and 4, for example, an exhaust purification system is shown that is provided with LNT in the exhaust channel, and is further provided upstream of this LNT with a fuel reformer that produces a reducing gas containing hydrogen and carbon monoxide by reforming hydrocarbon fuel. In this exhaust purification system in particular, a fuel reformer is used that produces a reducing gas such that hydrogen is more abundant than carbon monoxide by volume ratio. According to this system, it becomes possible to selectively reduce the NOx in the exhaust by adding reducing gas containing hydrogen from an upstream side of the LNT into the exhaust.

Here, as a method of producing reducing gas from hydrocarbon fuel, for example, a partial oxidation reaction using oxygen as an oxidant has been known, as shown in the following formula (9), for example.

$$C_nH_m + 1/2nO_2 \rightarrow nCO + 1/2mH_2 \qquad (9)$$

This partial oxidation reaction is an exothermic reaction using fuel and oxygen, and the reaction progresses spontaneously. As a result, once the reaction begins, hydrogen can be continuously produced without supplying heat from outside. In addition, in such a partial oxidation reaction, in a case of fuel and oxygen coming to coexist in a high temperature state, the combustion reaction as shown in the following formula (10) also progresses.

$$C_nH_m + (n+1/4m)O_2 \rightarrow nCO_2 + 1/2mH_2O \qquad (10)$$

Moreover, the steam reforming reaction, which uses steam as an oxidation, shown in the following formula (11) has been known.

$$C_nH_m + nH_2O \rightarrow nCO + (n+1/2m)H_2 \qquad (11)$$

This steam reforming reaction is an endothermic reaction using fuel and steam, and is not a reaction that progresses spontaneously. As a result, the steam reforming reaction is an easily controlled reaction relative to the partial oxidation reaction described above.

Patent Document 1: Japanese Patent No. 2586738
Patent Document 2: Japanese Patent No. 2600492
Patent Document 3: Japanese Patent No. 3642273
Patent Document 4: Japanese Unexamined Patent Application Publication No. 2002-89240
Non-patent Document 1: "Development of NOx Storage Reduction Three-way Catalyst System," Collective Papers of Society of Automotive Engineers of Japan, Vol. 26, No. 4, October 1995
Non-patent Document 2: "A NOx Reduction System Using Ammonia Storage-Selective Catalytic Reduction in Rich and Lean Poerations," 15 Aachener Kolloquium Fahrzeug- und Motorentechnik 2006 p. 259- 270

DISCLOSURE OF THE INVENTION

Problems to be Solved by the Invention

However, there is the following problem in a case of repeating lean operation and rich operation of an engine as in the technology shown in Patent Documents 1 and 2 and Non-patent Documents 1 and 2 described above, for example.

In other words, when rich operation is performed and the exhaust air/fuel ratio is made rich, although NOx occluded in the LNT desorbs, in a case where the LNT is a temperature lower than the activation temperature, it becomes difficult for the reduction reaction to occur with a reducing agent in the exhaust such as carbon monoxide and hydrocarbons, NOx will be discharged downstream of the LNT without being reduced, and thus the NOx purification performance may decline.

Consequently, it has been considered to raise the temperature of the exhaust by way of retarding the angle of the fuel injection period and closing the intake throttle, thereby raising the temperature of the LNT. However, in a case of performing such control, fuel consumption deteriorates, and the combustion stability of the engine may be adversely affected.

The exhaust purification system of Patent Documents 3 and 4 is different from that exemplified in Patent Document 1 and 2 described above, and specifically is a system that adds hydrogen, carbon monoxide and hydrocarbons into exhaust having an oxygen excess, irrespective of lean operation and rich operation.

However, in a case of purifying with LNT by adding a reducing agent such as hydrogen or carbon monoxide into exhaust having an oxygen excess in such a way, the ability to purify NOx is limited to approximately 200°C. For example, when the temperature of the LNT is at least 200°C, the hydrogen and carbon monoxide thus added combust. As a result, with such a temperature, the amount of additive is deficient, leading to the reduction reaction of NOx not progressing sufficiently.

In addition, in a case of providing a fuel reformer in an exhaust channel having an exhaust amount that regularly fluctuates, as in the exhaust purification systems of Patent Document 3 and 4, it is necessary to increase the reaction time for which the reforming catalyst of the fuel reformer and the exhaust come into contact, in order to effectively produce hydrogen in this fuel reformer. However, in order to increase the reaction time as such, it is necessary to increase the size of the reforming catalyst, which may raise cost.

In addition, in order to operate the fuel reformer in a stable state, it is necessary to maintain the reaction temperature of the reforming catalyst of this fuel reformer to be constant. However, when providing a fuel reformer in an exhaust channel for which the oxygen amount, steam amount, and temperature are always fluctuating as in the exhaust purification system of Patent Documents 3 and 4 described above, it becomes difficult to operate the fuel reformer in a stable state.

The present invention was made by taking into account the points described above, and has an object of providing an exhaust purification device of an internal combustion engine that can improve the NOx purification performance irrespective of the operating state of the engine.

Means for Solving the Problems

In order to achieve the above-mentioned object, the present invention provides an exhaust purification device of an internal combustion engine provided with a NOx purification catalyst (33) that is provided in an exhaust channel (4, 5) of the internal combustion engine and that, with an air/fuel ratio of exhaust flowing in the exhaust channel as an exhaust air/fuel ratio, adsorbs or occludes NOx in exhaust when the exhaust air/fuel ratio is made lean, and reduces the NOx adsorbed or occluded when the exhaust air/fuel ratio is made rich. The exhaust purification device includes a fuel reformer (50) that is provided separately from the exhaust channel, produces reducing gas containing hydrogen and carbon monoxide by reforming fuel, and supplies the reducing gas from an upstream side in the exhaust channel of the NOx purification catalyst into the exhaust channel, and an enrichment means (40) for enriching the exhaust air/fuel ratio. The enrichment means enriches the exhaust air/fuel ratio by making the air/fuel ratio of mixed gas combusted in the internal combustion engine to be rich while supplying reducing gas of a pressure higher than atmospheric pressure by way of the fuel reformer into the exhaust channel, in a case of one or a plurality of conditions among a plurality of operating conditions being satisfied.

According to this configuration, in the case of one or a plurality of conditions among the plurality of operating conditions being satisfied while enriching the exhaust air/fuel ratio, reducing gas containing hydrogen and carbon monoxide is supplied into the exhaust channel. In this way, it is possible to promote the reduction reaction of NOx in the NOx purification catalyst and prevent discharging NOx that has not been reduced in the NOx purification catalyst particularly under low temperature, by supplying reducing gas containing hydrogen, which excels in reduction reactivity under low temperatures in particular.

In addition, for example, even in such a case of the operating state of the internal combustion engine falling into a state in which it is difficult to make the engine air/fuel ratio to be rich, it is possible to richen the exhaust air/fuel ratio of exhaust flowing into the NOx purification catalyst while making the engine air/fuel ratio to be lean and maintain combustion of the internal combustion engine in a suitable state, by supplying reducing gas produced by the fuel reformer into the exhaust channel. Therefore, it is possible to improve NOx purification performance irrespective of the operating state of the internal combustion engine. In addition, here, since the engine air/fuel ratio can be kept lean, oil dilution occurs, and combustion of the internal combustion engine is no longer unstable.

Moreover, by providing the fuel reformer that produces reducing gas to be separate from the exhaust channel, reducing gas can always be produced with suitable efficiency, and this reducing gas can be supplied into the exhaust channel, irrespective of the operating state of the internal combustion engine, or the oxygen concentration, steam concentration, etc. of the exhaust. In addition, it becomes possible to supply reducing gas in response to the requirements such as the operating state of the internal combustion engine by providing the fuel reformer to be separate from exhaust channel. Moreover, reducing gas can be supplied into the exhaust channel without adding an extra device by supplying reducing gas of a pressure higher than atmospheric pressure into the exhaust channel.

On the other hand, in a case of providing the fuel reformer inside the exhaust channel, it is necessary to enlarge the fuel reformer so as to be able to operate without influencing the components, temperature, and flow rate of the exhaust; however, according to this configuration, it is possible to perform operation stably without enlarging the device by providing the fuel reformer to be separate from the exhaust channel.

In addition, by providing the fuel reformer to be separate from the exhaust channel, it becomes possible to activate the catalyst provided to the fuel reformer at an early stage by performing control of an independent system from the control of the internal combustion engine. Furthermore, the reduction reaction rate in the NOx purification catalyst can be improved by supplying reducing gas containing hydrogen. This can prevent desorption without the NOx adsorbed or occluded on the NOx purification catalyst 33 being reduced when the exhaust air/fuel ratio is made rich.

Preferably, the plurality of operating conditions includes the internal combustion engine being in an idle operating state.

According to this configuration, even in a case in which the internal combustion engine has entered an idle operating state, and a state has been entered in which it is difficult to make the engine air/fuel ratio rich, the reduction reaction of NOx in the NOx purification catalyst can be promoted by supplying reducing gas.

Preferably, the plurality of operating conditions includes the internal combustion engine being in a deceleration operating state.

According to this configuration, even in a case in which the internal combustion engine has entered a deceleration operating state, and a state has been entered in which it is difficult to make the engine air/fuel ratio rich, the reduction reaction of NOx in the NOx purification catalyst can be promoted by supplying reducing gas.

Preferably, the plurality of operating conditions includes a fuel injection amount of the internal combustion engine being less than a predetermined judgment amount.

According to this configuration, even in a case in which the fuel injection amount of the internal combustion engine is less than the predetermined judgment amount, and a state has been entered in which it is difficult to make the engine air/fuel ratio rich, the reduction reaction of NOx in the NOx purification catalyst can be promoted by supplying reducing gas.

Preferably, the plurality of operating conditions includes a generated torque (TRQ) of the internal combustion engine being less than a predetermined judgment value.

According to this configuration, even in a case in which the generated torque is lower than the predetermined judgment value, and a state has been entered in which it is difficult to make the engine air/fuel ratio rich, the reduction reaction of NOx in the NOx purification catalyst can be promoted by supplying reducing gas.

Preferably, the plurality of operating conditions includes a temperature (TE) of exhaust flowing in the exhaust channel being lower than a predetermined judgment temperature.

According to this configuration, even in a case in which the temperature of the exhaust is lower than the predetermined judgment temperature, and a state has been entered in which it is difficult for the reduction reaction to occur in the NOx purification catalyst, the reduction reaction of NOx in the NOx purification catalyst can be promoted by supplying reducing gas.

Preferably, the plurality of operating conditions includes a temperature (TLNC) of the NOx purification catalyst being lower than a predetermined judgment temperature (TATH).

According to this configuration, even in a case in which the temperature of the NOx purification catalyst is lower than the predetermined judgment temperature, and it has become difficult for the reduction reaction to occur in the NOx purification catalyst, the reduction reaction of NOx in the NOx purification catalyst can be promoted by supplying reducing gas.

Preferably, the exhaust purification device further includes a supply interruption means (40) for stopping a supply of reducing gas from the fuel reformer in a case where the temperature (TLNC) of the NOx purification catalyst has become at least a predetermined judgment temperature (TBTH) while reducing gas is being supplied by the fuel reformer.

According to this configuration, the supply of this reducing gas is stopped in a case where the temperature of the NOx purification catalyst has become at least the predetermined judgment temperature while reducing gas is being supplied. In this way, it is possible to reduce NOx efficiently by stopping the supply of reducing gas in response to the temperature of the NOx purification catalyst raising and being activated.

Preferably, the exhaust purification device further includes a timing means (40) for measuring an elapsed time (TIMH) from starting supply of reducing gas by the fuel reformer. The enrichment means stops the supply of reducing gas by the fuel reformer in a case where the elapsed time thus measured by the timing means has become a predetermined judgment time (TIMHE).

According to this configuration, wastefully consuming the fuel for producing this reducing gas due to continuing supply of reducing gas over a long time period can be prevented.

Preferably, the exhaust purification device further includes an enrichment determination means for determining whether to enrich the exhaust air/fuel ratio based on at least one among a temperature (TLNC) of the NOx purification catalyst, an estimated amount (TRN) of NOx adsorbed or occluded to the NOx purification catalyst, a revolution speed (NE) of the internal combustion engine, and a generated torque (TRQ) of the internal combustion engine.

According to this configuration, effective enrichment according to the state of the internal combustion engine is possible by determining whether to enrich the exhaust air/fuel ratio based on the NOx adsorption amount, revolution speed, and generated torque.

Preferably, the exhaust purification device further includes an intake amount reduction means for reducing an intake air amount (GA) of the internal combustion engine when the exhaust air/fuel ratio is made rich.

According to this configuration, the temperature of the exhaust is raised and thus the temperature of the NOx purification catalyst can be raised, by reducing the intake air amount when enriching the exhaust air/fuel ratio. In addition, it is possible to make a supply amount of reducing gas necessary in order to make the air/fuel ratio of gas flowing into the NOx purification catalyst rich to be small.

Preferably, the exhaust purification device further includes an exhaust air/fuel ratio target value determination means (40) for determining a target value (NAFTV, HAFTV) of the exhaust air/fuel ratio (AF) when enriching the exhaust air/fuel ratio, based on at least one among a temperature (TLNC) of the NOx purification catalyst, an estimated amount (TRN) of NOx adsorbed or occlude on the NOx purification catalyst, a rich control duration (TIMNE, TIMHE), a revolution speed (NE) of the internal combustion engine, and a generated torque (TRQ) of the internal combustion engine. The enrichment means enriches the exhaust air/fuel ratio so that the exhaust air/fuel ratio (AF) matches a target value (NAFTV, HAFTV) determined by the exhaust air/fuel ratio target value determination means.

According to this configuration, the target value of the exhaust air/fuel ratio is determined based on at least one among the temperature of the NOx purification catalyst, NOx adsorption amount, rich control time, revolution speed, and generated torque, and the exhaust air/fuel ratio is enriched so as to match this target value. As a result, it is possible to enrich at an exhaust air/fuel ratio suited to the state of the NOx purification catalyst and the operating state of the internal combustion engine.

Preferably, the enrichment means adjusts at least one among a main injection amount of the internal combustion engine, a post injection amount of the internal combustion engine, an intake air amount (GA) of the internal combustion engine, and a supply amount (GRG) of reducing gas supplied from the fuel reformer to the exhaust channel, so that the exhaust air/fuel ratio (AF) matches the target value (NAFTV, HAFTV) determined by the exhaust air/fuel ratio target value determination means.

According to this configuration, the exhaust air/fuel ratio is made to match the target value by adjusting at least one amount the main injection amount, post injection amount, intake air amount, and supply amount of reducing gas. As a result, it is possible to make the exhaust air/fuel ratio more reliably match the target value.

Preferably, the fuel reformer produces reducing gas with carbon monoxide as a main component by way of a partial oxidation reaction of hydrocarbon fuel and air.

According to this configuration, this fuel reformer can be a smaller size by producing reducing gas by way of the partial oxidation reaction. In order words, this is because a device to supply extra energy from outside does not need to be provided since the partial oxidation reaction as described above is an exothermic reaction, and once the reaction starts, the reaction progresses spontaneously.

In addition, there is also no need to also provide a converter and system for concentrating hydrogen of a shift reaction, etc. Moreover, the light-off time of the fuel reformer can be shortened by making the fuel reformer to be small in this way. Therefore, reducing gas can be quickly supplied into the exhaust channel as needed. In addition, by introducing light hydrocarbons produced secondarily in this partial oxidation reaction as well as carbon monoxide and hydrogen to the NOx purification catalyst, it can also be used in reduction of NOx.

BRIEF DESCRIPTION OF THE DRAWINGS

FIG. 1 is a view showing a configuration of an internal combustion engine and the exhaust purification device thereof according to an embodiment of the present invention;
FIG. 2 is a flowchart showing a sequence of enrichment control by an ECU according to the embodiment;
FIG. 3 is a schematic diagram showing a configuration of a test apparatus for NOx purification performance evaluation testing; and
FIG. 4 is a view showing test results of Example and Comparative Example.

EXPLANATION OF REFERENCE NUMERALS

1 Engine (internal combustion engine)
4 Exhaust pipe (exhaust channel)
5 Exhaust manifold (exhaust channel)
33 NOx purification catalyst
40 Electronic control unit (enrichment means, enrichment determination means, supply interruption means, exhaust air/fuel ratio target value determination means, intake amount reduction means, timing means)
50 Fuel reformer

PREFERRED MODE FOR CARRYING OUT THE INVENTION

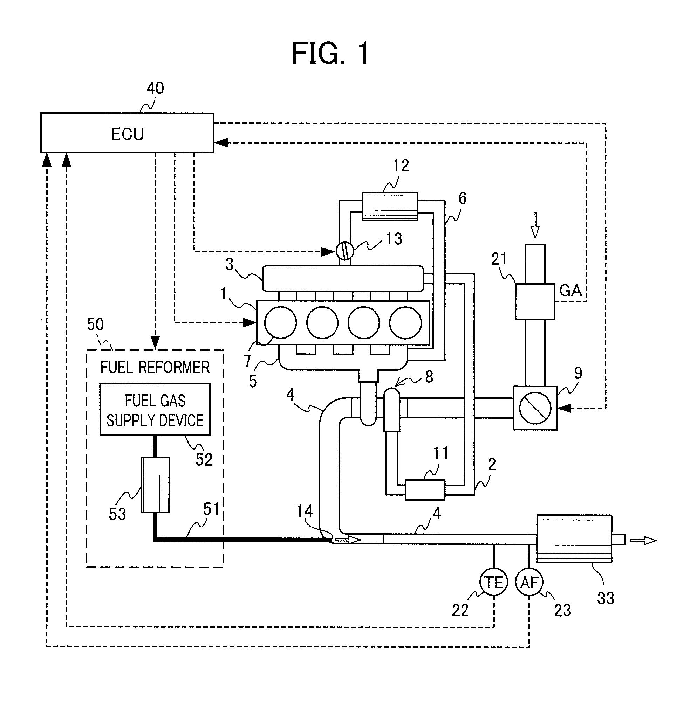

FIG. 1 is a view showing a configuration of an internal combustion engine and the exhaust purification device thereof according to an embodiment of the present invention.

An internal combustion engine (hereinafter referred to as "engine") 1 is a diesel engine that directly injects fuel into the combustion chamber of each cylinder 7, and fuel injectors, which are not illustrated, are provided to each of the cylinders 7.

These fuel injectors are electrically connected by an electronic control unit (hereinafter referred to as "ECU") 40, and the valve-open duration and the valve-close duration of the fuel injectors are controlled by the ECU 40.

The engine 1 is provided with intake plumbing 2 in which intake air flows, exhaust plumbing 4 in which exhaust gas flows, an exhaust-gas recirculation path 6 that recirculates a portion of the exhaust in the exhaust plumbing 4 to the intake plumbing 2, and a turbocharger 8 that compresses and feeds intake air to the intake plumbing 2.

The intake plumbing 2 is connected to the intake port of each cylinder 7 of the engine 1 via a plurality of branches of an intake manifold 3. The exhaust plumbing 4 is connected to the exhaust port of each cylinder 7 of the engine 1 via a plurality of branches of an exhaust manifold 5. The exhaust-gas recirculation path 6 branches from the exhaust manifold 5 and leads to the intake manifold 3.

The turbocharger 8 includes a turbine, which is not illustrated, provided to the exhaust plumbing 4, and a compressor, which is not illustrated, provided to the intake plumbing 2. The turbine is driven by the kinetic energy of exhaust gas flowing in the exhaust plumbing 4. The compressor is rotationally driven by the turbine, and compresses and feeds intake air into the intake plumbing 2. In addition, the turbine is provided with a plurality of variable vanes, which are not illustrated, and is configured so that the turbine revolution number (revolution speed) can vary by way of causing the aperture of the variable vanes to change. The vane aperture of the turbine is electromagnetically controlled by the ECU 40.

A throttle valve 9 that controls the intake air amount GA of the engine 1 is provided inside the exhaust plumbing 2 at an upstream side of the turbocharger 8. This throttle valve 9 is connected to the ECU 40 via an actuator, and the aperture thereof is electromagnetically controlled by the ECU 40. In addition, an intercooler 11 for cooling the intake air compressed by the turbocharger 8 is provided in the intake plumbing 2 at a downstream side of the turbocharger 8.

The exhaust-gas recirculation path 6 connects the exhaust manifold 5 and the intake manifold 3, and recirculates a portion of the exhaust emitted from the engine 1. An EGR cooler 12, which cools exhaust gas that is recirculated, and an EGR valve 13 that controls the flow rate of exhaust gas being recirculated are provided in the exhaust-gas recirculation path 6. The EGR valve 13 is connected to the ECU 40 via an actuator, which is not illustrated, and the valve aperture thereof is electromagnetically controlled by the ECU 40.

A NOx purification catalyst 33 that purifies exhaust gas is provided inside the exhaust plumbing 4 at a downstream side of the turbocharger 8.

The NOx purification catalyst 33 includes platinum (Pt) that acts as a catalyst and is supported on a carrier of alumina ($Al_2O_3$), ceria ($CeO_2$), and a complex oxide of cerium and a rare earth (hereinafter referred to as "ceria-based complex oxide"), a ceria or a ceria-based complex oxide having NOx adsorption capacity, and a zeolite having a function of retaining ammonia ($NH_3$) generated on the catalyst as ammonium ion ($NH_4^+$).

In the present embodiment, a material formed by loading a NOx reduction catalyst composed of two layers onto a catalyst support is used as the NOx purification catalyst 33.

The lower layer of the NOx reduction catalyst is formed by producing a slurry by placing a material constituted with 4.5 (g/L) of platinum, 60 (g/L) of ceria, 30 (g/L) of alumina, 60 (g/L) of Ce-Pr-La-Ox, and 20 (g/L) of Zr-Ox into a ball mill with an aqueous medium, then agitating and mixing, followed by coating this slurry on the catalyst support.

In addition, the upper layer of the NOx reduction catalyst is formed by producing a slurry by placing a material constituted with 75 (g/L) of a beta zeolite ion-exchanged with iron (Fe) and cerium (Ce), 7 (g/L) of alumina, and 8 (g/L) of a binder into a ball mill with an aqueous medium, then agitating and mixing, followed by coating this slurry on the lower layer described above.

When the amount of adsorbed ammonia of the NOx purification catalyst 33 is small, since the NOx purification ability decreases, supply of a reducing agent (hereinafter referred to as "reduction") to the NOx purification catalyst 33 is performed in order to reduce the NOx appropriately. With this reduction, for example, the reducing agent is supplied to the NOx purification catalyst 33 by making the air/fuel ratio (engine air/fuel ratio) of the mixture inside the combustion chamber of the engine 1 to be richer than stoichiometric by way of increasing the fuel amount injected from the fuel injectors and decreasing the intake air amount GA with the throttle valve 9. In other words, by enriching the air/fuel ratio (exhaust air/fuel ratio) of exhaust emitted from the engine 1, the concentration of reducing agent in the exhaust flowing into the NOx purification catalyst 33 becomes higher than the concentration of oxygen, thereby carrying out reduction.

Purification of NOx in this NOx purification catalyst 33 will be explained.

First, the engine air/fuel ratio is set to be leaner than stoichiometric, and when so-called lean burn operation is performed, the concentration of reducing agent in the exhaust flowing into the NOx purification catalyst 33 becomes lower than the concentration of oxygen. As a result thereof, nitrogen monoxide (NO) and oxygen ($O_2$) in the exhaust react by action of the catalyst, and is adsorbed to ceria or a ceria-based complex oxide as $NO_2$. In addition, carbon monoxide (CO) that has not reacted with oxygen is also adsorbed to ceria or the ceria-based complex oxide.

Next, so-called rich operation is performed in which the engine air/fuel ratio is set to be richer than stoichiometric, and the exhaust air/fuel ratio is enriched. In other words, when reduction to make the concentration of the reducing agent in the exhaust higher than the concentration of oxygen is carried out, carbon dioxide ($CO_2$) and hydrogen ($H_2$) are generated by carbon monoxide in the exhaust reacting with water ($H_2O$), and carbon monoxide (CO) and carbon dioxide ($CO_2$) as well as hydrogen are generated by hydrocarbons (HC) in the exhaust reacting with water. Furthermore, NOx contained in the exhaust and NOx (NO, $NO_2$) adsorbed to ceria or the ceria-based complex oxide (and platinum) react with the hydrogen thus generated by action of the catalyst, thereby generating ammonia ($NH_3$) and water. In addition, the ammonia thus generated here is adsorbed to zeolite in the form of ammonium ions ($NH_4^+$).

Next, lean burn operation is performed in which the engine air/fuel ratio is set to be leaner than stoichiometric, and when the concentration of the reducing agent in the exhaust flowing into the NOx purification catalyst 33 is set to be lower than the concentration of oxygen, NOx is adsorbed to ceria or the ceria-based complex oxide. Furthermore, in a state where ammonium ions are adsorbed to the zeolite, NOx and oxygen in the exhaust react with ammonia, thereby generating nitrogen ($N_2$) and water.

In this way, according to the NOx purification catalyst 33, ammonia generated during reducing agent supply is adsorbed to the zeolite, and the ammonia adsorbed during lean burn operation reacts with NOx; therefore, it is possible to perform purification of NOx efficiently.

In addition, a fuel reformer 50, which reforms fuel gas to produce a reformed gas containing hydrogen ($H_2$), and carbon monoxide (CO) is connected upstream of the NOx purification catalyst 33 inside the exhaust plumbing 4. This fuel reformer 50 supplies the reformed gas thus produced into the exhaust plumbing 4 from an inlet 14 formed upstream of the NOx purification catalyst 33 inside the exhaust plumbing 4 as reducing gas.

The fuel reformer 50 is configured to include a gas path 51 that connects one end side to the exhaust plumbing 4, a fuel gas supply device 52 that supplies fuel gas from another end side of this gas path 51, and a reforming catalyst 53 as a reforming catalyst provided in the gas path 51.

The fuel gas supply device 52 produces fuel gas by mixing fuel stored in a fuel tank and air supplied by the compressor at a predetermined ratio, and supplies this fuel gas to the gas path 51. This fuel gas supply device 52 is connected to the ECU 40, and a supply amount of fuel gas and a mixture ratio thereof are controlled by the ECU 40. In addition, it is made possible to control the supply amount of reducing gas GRG (amount of reducing gas supplied into the exhaust plumbing 4 per unit time) supplied to the exhaust plumbing 4 by controlling the supply amount of this fuel gas.

The reforming catalyst 53 contains rhodium and ceria. This reforming catalyst 53 is a catalyst that reforms the fuel gas supplied from the fuel gas supply device 52, and produces a reformed gas containing hydrogen, carbon monoxide, and hydrocarbons. More specifically, this reforming catalyst 53 produces reformed gas that is higher pressure than atmospheric pressure and contains more carbon monoxide than hydrogen by volume ratio by way of the partial oxidation reaction of hydrocarbon fuel constituting the fuel gas and air. In addition, as described above, the partial oxidation reaction is an exothermal reaction. As a result, the fuel reformer 50 is able to supply into the exhaust plumbing 4 reducing gas of a temperature that is higher than the exhaust in the vicinity of the inlet 14 in the exhaust plumbing 4.

In addition, a heater (not illustrated) configured to include a glow plug, spark plug, or the like is connected to the reforming catalyst 53, whereby it is possible to heat the reforming catalyst 53 with startup of the fuel reformer 50. Moreover, the fuel reformer 50 is provided separately from the exhaust plumbing 4. In other words, the fuel gas supply device 52 and reforming catalyst 53 of the fuel reformer 50 are not provided in the exhaust plumbing 4.

A crank angle position sensor (not illustrated) that detects the rotational angle of the crankshaft of the engine 1, an accelerator sensor (not illustrated) that detects a depression amount AP of the accelerator pedal of a vehicle being driven by the engine 1, an air-flow meter 21 that detects an intake air amount GA (air amount newly aspirated into the engine 1 per unit time) of the engine 1, an exhaust temperature sensor 22 that detects a temperature TE of exhaust flowing into the NOx purification catalyst 33, and a UEGO sensor 23 that detects an oxygen concentration of the exhaust flowing into the NOx purification catalyst 33, i.e. exhaust air/fuel ratio AF, are connected to the ECU 40, and detection signals of these sensors are supplied to the ECU 40.

Here, a revolution speed NE of the engine 1 is calculated by the ECU 40 based on the output of the crank angle position sensor. In addition, a generated torque TRQ of the engine 1 is calculated by the ECU 40 based on the fuel injection amount of the fuel injectors determined according to the depression amount AP of the accelerator pedal, which is not illustrated.

The ECU 40 includes an input circuit that has functions such as of shaping input signal wave forms from every kind of sensor, correcting the voltage levels to predetermined levels, and converting analog signal values to digital signal values, and a central processing unit (hereinafter referred to as "CPU"). In addition to this, the ECU 40 includes a storage circuit that stores every kind of calculation program executed by the CPU and calculation results, and an output circuit that outputs control signals to the fuel reformer 50, throttle valve 9, EGR valve 13, turbocharger 8, fuel injectors of the engine 1, and the like.

The engine 1 is normally operated by setting the engine air/fuel ratio to be leaner than stoichiometric, and enrichment control to set the exhaust air/fuel ratio to be richer than stoichiometric is performed periodically.

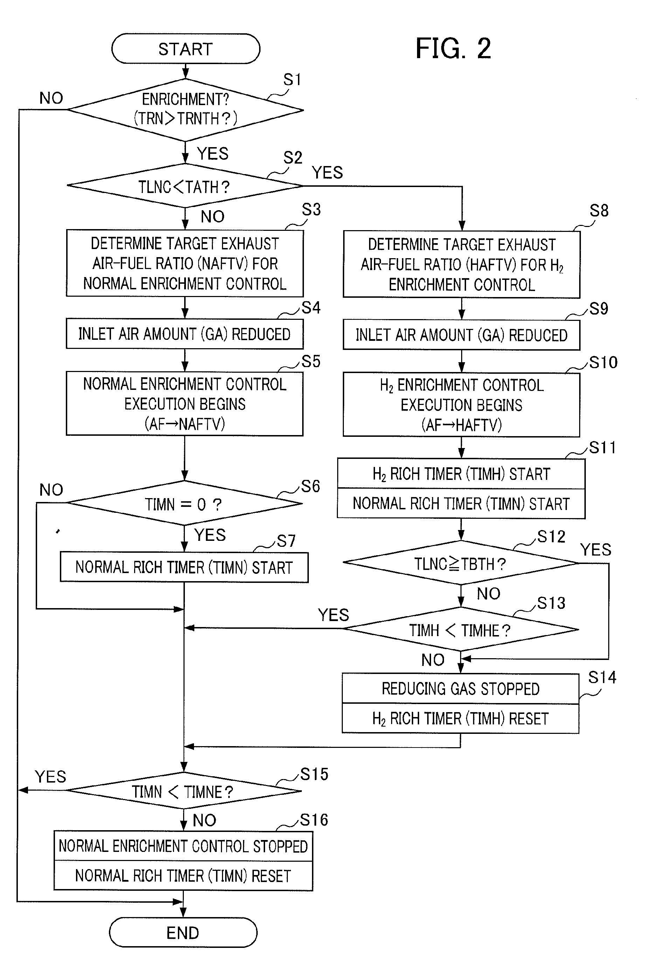

FIG. 2 is a flowchart showing a sequence of enrichment control by the ECU. As shown in FIG. 2, in enrichment control, normal enrichment control that enriches the engine air/fuel ratio and $H_2$ enrichment control that supplies reductive gas produced by the fuel reformer to the exhaust plumbing become selectively executable according to predetermined conditions.

In Step S1, it is determined whether to execute enrichment, and in the case of this determination being YES, Step S2 is advanced to, and in the case of being NO, enrichment control is ended. More specifically, the NOx adsorption amount TRN of the NOx purification catalyst is estimated based on the intake air amount GA, the fuel injection amount of the engine, etc., and in a case of this NOx adsorption amount TRN being at least a predetermined judgment amount TRNTH, enrichment control is executed.

In Step S2, it is determined whether the temperature TLNC of the NOx purification catalyst is lower than a predetermined judgment temperature TATH. In a case of this determination being YES, Step S8 is advanced to, and in a case of being NO, Step S3 is advanced to. In the present embodiment, the temperature TLNC of the NOx purification catalyst is estimated based on the exhaust temperature TE detected by the exhaust temperature sensor.

In Step S3, a target value NAFTV of the exhaust air/fuel ratio AF during normal enrichment control execution is determined, and Step S4 is advanced to. Here, this target exhaust air/fuel ratio NAFTV is determined based on at least one among the temperature TLNC of the NOx purification catalyst, NOx adsorption amount TRN, time TIMNE continuing rich control, revolution speed NE, and generated torque TRQ.

In Step S4, the throttle valve is closed to reduce the intake air amount GA, and Step S5 is advanced to.

In Step S5, execution of normal enrichment control is started, and Step S6 is advanced to. In this normal enrichment control, at least one among the main injection amount of the engine, post injection amount, and intake air amount GA is adjusted so as match the exhaust air/fuel ratio AF with the target exhaust air/fuel ratio NAFTV.

In Step S6, it is determined whether the normal rich timer TIMN is 0, and in a case of this determination being YES, Step S7 is advanced to, Step S15 is advanced to after starting the normal rich timer TIMN, and in a case of being NO, Step S15 is advanced to.

In Step S8, a target value HAFTV of the exhaust air/fuel ratio AF during $H_2$ enrichment control execution is determined, and Step S9 is advanced to. Here, this target exhaust air/fuel ratio HAFTV is determined based on at least one among the temperature TLNC of the NOx purification catalyst, NOx adsorption amount TRN, time TIMNE continuing rich control, revolution speed NE, and generated torque TRQ. Furthermore, here, the target exhaust air/fuel ratio HAFTV for $H_2$ enrichment control is set to a value that is different from the target exhaust air/fuel ratio NAFTV for normal enrichment control.

In Step S9, the throttle valve is narrowed to reduce the intake air amount GA, and Step S10 is advanced to.

In Step S10, execution of $H_2$ enrichment control is started, and Step S11 is advanced to. In this $H_2$ enrichment control, at least one among the main injection amount of the engine, post injection amount, intake air amount GA, and reducing gas supply amount GRG is adjusted so as to make the exhaust air/fuel ratio AF match the target exhaust air/fuel ratio HAFTV.

In Step S11, the $H_2$ rich timer TIMH and the normal rich timer TIMN start, and Step S12 is advanced to.

In Step S12, it is determined whether the temperature TLNC of the NOx purification catalyst is at least a predetermined judgment temperature TBTH. In a case of this determination being YES, Step S14 is advanced to, and in a case of being NO, Step S13 is advanced to. Here, the judgment temperature TBTH is set to a value that is larger than the judgment temperature TATH described above.

In Step S13, it is determined whether a measurement time TIMH of the $H_2$ rich timer is less than a predetermined judgment time TIMHE. In a case of this determination being YES, Step S15 is advanced to, and in a case of being NO, Step S14 is advanced to. The judgment time TIMHE of the $H_2$ rich timer is set to be shorter than a judgment time TIMNE of the normal rich timer described below.

In Step S14, supply of reducing gas by the fuel reformer is stopped, the $H_2$ rich timer TIMH is reset, and Step S15 is advanced to.

In Step S15, it is determined whether the measurement time TIMN of the normal rich timer is less than the predetermined judgment time TIMNE. In a case of this determination being YES, enrichment control is ended, and in a case of being NO, Step S16 is advanced to.

In Step S16, normal enrichment control is stopped, the normal rich timer TIMN is reset, and enrichment control ends.

As described in detail above, according to the present embodiment, in the case of one or a plurality of conditions among a plurality of operating conditions being satisfied while enriching the exhaust air/fuel ratio, reducing gas containing hydrogen and carbon monoxide is supplied into the exhaust plumbing 4. In this way, it is possible to promote the reduction reaction of NOx in the NOx purification catalyst 33 and prevent discharging NOx that has not been reduced in the NOx purification catalyst 33 particularly under low temperature, by supplying reducing gas containing hydrogen that excels in reduction reactivity under low temperatures in particular.

In addition, for example, even in such a case of the operating state of the engine 1 falling into a state in which it is difficult to make the engine air/fuel ratio to be rich, it is possible to richen the exhaust air/fuel ratio of exhaust flowing into the NOx purification catalyst 33 while making the engine air/fuel ratio to be lean and maintain combustion of the engine 1 in a suitable state, by supplying reducing gas produced by the fuel reformer 50 into the exhaust plumbing 3. Therefore, it is possible to improve NOx purification performance independently from the operating state of the engine 1. In addition, here, since the engine air/fuel ratio can be kept lean, oil dilution occurs, and combustion of the engine 1 is no longer unstable.

Moreover, by providing the fuel reformer 50 that produces reducing gas to be separate from the exhaust plumbing 4, reducing gas can always be produced with suitable efficiency, and this reducing gas can be supplied into the exhaust plumbing 4 irrespective of the operating state of the engine 1, or the oxygen concentration, steam concentration, etc. of the exhaust. In addition, it becomes possible to supply reducing gas in response to requirements such as the operating state of the engine 1 by providing the fuel reformer 50 to be separate from the exhaust plumbing 4.

On the other hand, in a case of providing the fuel reformer 50 inside the exhaust plumbing 4, it is necessary to enlarge the fuel reformer 50 so as to be able to operate without influencing the components, temperature, and flow rate of the exhaust; however, according to the present invention, it is possible to perform operation stably without enlarging the device by providing the fuel reformer 50 to be separate from the exhaust plumbing 4. In addition, by providing the fuel reformer 50 to be separate from the exhaust plumbing 4, it becomes possible to activate the catalyst provided to the fuel reformer 50 at an early stage by performing control of an independent system from the control of the engine 1. Moreover, reductive gas can be supplied into the exhaust plumbing 4 without adding an extra device by supplying reductive gas of a pressure higher than atmospheric pressure into the exhaust plumbing 4.

Furthermore, the reduction reaction rate in the NOx purification catalyst 33 can be improved by supplying reducing gas containing hydrogen. This can prevent desorption without the NOx adsorbed or occluded to the NOx purification catalyst 33 being reduced when the exhaust air/fuel ratio is made rich.

In addition, according to the present embodiment, even in a case where the temperature TLNC of the NOx purification catalyst 33 is lower than the predetermined judgment temperature TATH, and it has become difficult for the reduction reaction to occur in the NOx purification catalyst 33, the reduction reaction of NOx in the NOx purification catalyst 33 can be promoted supplying the reducing gas.

Moreover, according to the present embodiment, in a case of the temperature TLNC of the NOx purification catalyst 33 becoming at least the predetermined judgment temperature TBTH while supplying the reducing gas, the supply of this reducing gas is stopped. In this way, it is possible to reduce NOx efficiently by stopping the supply of reducing gas in response to the temperature of the NOx purification catalyst 33 raising and being activated.

Furthermore, according to the present embodiment, wastefully consuming the fuel for producing this reducing gas due to continuing supply of reducing gas over a long time period can be prevented.

Additionally, according to the present embodiment, effective enrichment according to the state of the internal combustion engine is possible by determining whether to enrich the exhaust air/fuel ratio based on the NOx adsorption amount.

Moreover, according to the present embodiment, the temperature of the exhaust is raised and thus the temperature of the NOx purification catalyst 33 can be raised by reducing the intake air amount GA when enriching the exhaust air/fuel ratio. In addition, it is possible to make a supply amount of reducing gas necessary in order to make the air/fuel ratio of gas flowing into the NOx purification catalyst 33 rich to be small.

Furthermore, according to the present embodiment, the target values NAFTV and HAFTV of the exhaust air/fuel ratio is determined based on at least one among the temperature TLNC of the NOx purification catalyst 33, NOx adsorption amount TRN, rich control time, revolution speed NE, and generated torque TRQ, and the exhaust air/fuel ratio is enriched so as to match this target value. As a result, it is possible to enrich at an exhaust air/fuel ratio suited to the state of the NOx purification catalyst 33 and the operating state of the engine 1.

In addition, according to the present embodiment, the exhaust air/fuel ratio can be made to match the target value by adjusting at least one among the main injection amount, post injection amount, intake air amount GA, and supply amount GRG of reducing gas. As a result, it is possible to make the exhaust air/fuel ratio more reliably match the target value.

Additionally, according to the present embodiment, this fuel reformer 50 can be a smaller size by producing the reducing gas by way of the partial oxidation reaction. In order words, this is because a device to supply extra energy from outside does not need to be provided since the partial oxidation reaction as described above is an exothermic reaction, and once the reaction starts, the reaction progresses spontaneously. In addition, there is also no need to also provide a converter and system for concentrating hydrogen of a shift reaction, etc. Moreover, the light-off time of the fuel reformer 50 can be shortened by making the fuel reformer 50 to be small in this way. Therefore, reducing gas can be quickly supplied into the exhaust plumbing 4 as needed.

In addition, by introducing light hydrocarbons produced secondarily in this partial oxidation reaction as well as carbon monoxide and hydrogen to the NOx purification catalyst 33, it can also be used in reduction of NOx.

In the present embodiment, the ECU 40 is configured with an enrichment means, an enrichment determination means, a supply interruption means, an exhaust air/fuel ratio target value determination means, an intake amount reduction means, and a timing means. More specifically, the means related to Steps S1 to S16 of FIG. 2 correspond to the enrichment means, the means related to Step S1 correspond to the enrichment determination means, the means related to Steps S12 and S14 correspond to the supply interruption means, the means related to Steps S3 and S8 correspond to the exhaust air/fuel ratio target value determination means, the means related to Steps S4 and S9 correspond to the intake amount reduction means, and the means related to Steps S7 and S11 correspond to the timing means.

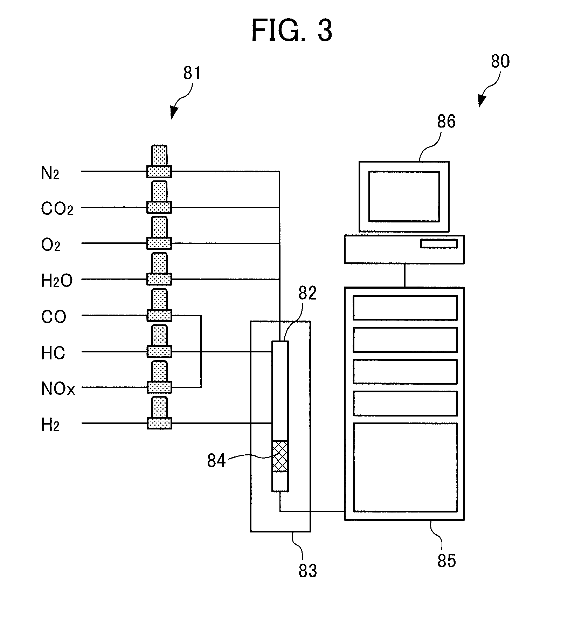

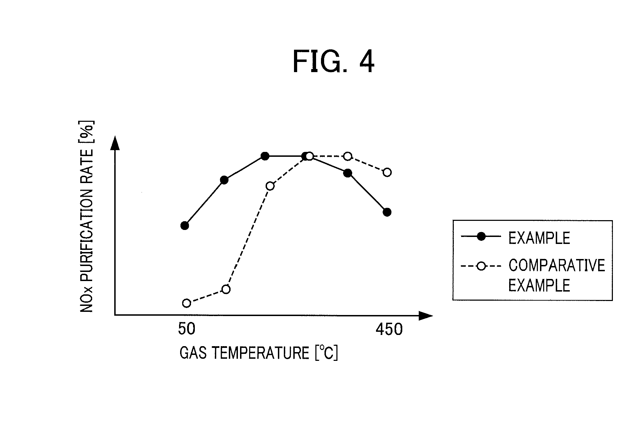

Next, NOx purification evaluation tests to verify the effects due to supplying reductive gas to the exhaust plumbing as in the above-mentioned embodiment will be explained with reference to FIGS. 3 and 4.

NOx Purification Performance Evaluation Test Method

FIG. 3 is a schematic diagram showing a configuration of a test apparatus 80 for NOx purification performance evaluation tests.

The test apparatus 80 is configured to include a supply device 81 that supplies model gas at a predetermined composition, a heater 83 that is provided with adsorbent 84 inside thereof, a gas analyzer 85 that analyzes the model gas, and a computer 86 for data acquisition.

The supply device 81 supplies model gas constituted by $N_2$, $CO_2$, $O_2$, $H_2O$, CO, HC, NOx, and $H_2$ to the heater 83. This supply device 81 makes it possible to adjust the flow rate of each component of the model gas.

The heater 83 is provided with a reactor 82 and adsorbent 84 inside thereof, and heats this reactor 82 and adsorbent 84. The reactor 82 mixes and supplies to the adsorbent 84 the model gas supplied from the supply device 81.

The adsorbent 84 uses a material constituted by a three-way catalyst and a NOx purification catalyst.

More specifically, a substance prepared by producing a slurry by way of agitating and mixing a material of a composition as described hereinafter in a ball mill along with an aqueous medium, coating this slurry on a support made of Fe-Cr-Al alloy, and drying and calcining over 2 hours at 600°C, is used for the three-way catalyst. The composition of the three-way catalyst becomes Pt = 2.4, Rh = 1.2, Pd = 6.0, $CeO_2$ = 50, $Al_2O_3$ = 150, and binder = 10.

Since the same material as the NOx purification catalyst 33 (refer to FIG. 1 described above) described in the above embodiment is used, an explanation thereof is omitted.

The gas analyzer 85 measures the NOx concentration of the model gas inside the heater 83 supplied from the reactor 82 to the adsorbent 84, and having passed through this adsorbent 84. The computer 86 for data acquisition processes data related to this NOx concentration, and calculates the NOx purification ratio for each temperature. The NOx purification ratio is calculated based on the following formula.

```
NOx purification rate (%) = (Cin - Cout)/Cin x 100
```

Here, Cin is the NOx concentration of model gas at the inlet of the adsorbent 84, and Cout is the NOx concentration of model gas at the outlet of the adsorbent 84. In addition, the NOx concentration of the model gas was measured according to a chemiluminescence method.

In the present evaluation tests, the NOx purification rate of model gas having passed the adsorbent 84 was measured in the test apparatus 90 configured as above while supplying model gas, with this model gas being heated from 50°C up to 450°C.

In addition, the model gas was alternately supplied for the model gas of a composition of a lean atmosphere and a model gas of a composition of a rich atmosphere over 55 seconds and 5 seconds, respectively.

Example

In the model gas of the Example, model gas having the below composition was used as gas simulating the gas to which the reductive gas (containing carbon monoxide, hydrogen, and hydrocarbons) produced by the fuel reformer according to the above-mentioned embodiment to the exhaust has been added.

Lean Atmosphere

| NO : | 90 ppm |
|---|---|
| CO : | 6000 ppm |
| HC (propylene): | 500 ppmC $(C_3H_6)$ |
| $O_2$ : | 6% |
| $CO_2$ : | 6% |
| $H_2O$ : | 7% |
| $N_2$ : | balance gas |
| $H_2$ : | 5000 ppm |
| SV=50000h$^{-1}$ | |

Rich Atmosphere

| NO : | 90 ppm |
|---|---|
| CO : | 2.1% |
| HC (propylene): | 500 ppmC $(C_3H_6)$ |
| $O_2$ : | 0% |
| $CO_2$ : | 6% |
| $H_2O$ : | 7% |
| $N_2$ : | balance gas |
| $H_2$ : | 6000 ppm |
| SV=50000h$^{-1}$ | |

Comparative Example

In the model gas of the Comparative Example, model gas having the below composition was used as gas simulating the exhaust to which the above reductive gas has not been added.

Lean Atmosphere

| NO : | 90 ppm |
|---|---|
| CO : | 1000 ppm |
| HC (propylene): | 500 ppmC $(C_3H_6)$ |
| $O_2$ : | 6% |
| $CO_2$ : | 6% |
| $H_2O$ : | 7% |
| $N_2$ : | balance gas |
| $H_2$ : | 0 ppm |
| SV=50000h$^{-1}$ | |

Rich Atmosphere

| NO : | 90 ppm |
|---|---|
| CO : | 2% |
| HC (propylene) : | 500 ppmC $(C_3H_6)$ |
| $O_2$ : | 0% |
| $CO_2$ : | 6% |
| $H_2O$ : | 7% |

(continued)

| | |
|---|---|
| $N_2$ : | balance gas |
| $H_2$ : | 0 ppm |
| | $SV=50000h^{-1}$ |

Test Results

FIG. 4 is a graph showing test results of the Example and Comparative Example. In FIG. 4, the horizontal axis shows the temperature of the model gas, and the vertical axis shows the NOx purification ratio. In addition, the black dots show a relationship between the gas temperature and NOx purification rate in the Example, and the white dots show a relationship between the gas temperature and the NOx purification rate in the Comparative Example.

When comparing the NOx purification rates of the Example and the NOx purification ratio of the Comparative Example, the NOx purification rate of the Example is substantially constant over the entire temperature range, whereas the Comparative Example has a NOx purification rate in a low temperature range that becomes particularly small. Therefore, it has been verified that the NOx purification performance in a low temperature range in particular can be improved by adding reductive gas containing carbon monoxide and hydrogen as in the Example.

It should be noted that the present invention is not to be limited to the embodiment described above, and various modifications thereto are possible.

In the above-mentioned embodiment, the NOx adsorption amount TRN was estimated, and a determination of whether to execute enrichment control was performed based on this NOx adsorption amount TRN (refer to Step S1 in FIG. 2); however, it is not limited to this. For example, determination of whether to execute enrichment control may be performed based on the operating state of the engine such as revolution speed NE, and generated TRQ. Alternatively, determination of whether to execute enrichment control may be performed based on at least two among the NOx adsorption amount TRN, revolution speed NE, and generated torque TRQ. As a result, it is possible to effectively enrich according to the operating state of the engine 1.

In the above-mentioned embodiment, determination of whether to execute $H_2$ enrichment control was performed based on the temperature TLNC of the NOx purification catalyst; however, it is not limited thereto. For example, it may be determined based on operating conditions such as whether the engine is an idle operating state, whether the engine is a deceleration operation state, whether the fuel injection amount of the engine is less than a predetermined judgment amount, whether the generated torque TRQ is smaller that a predetermined judgment value, and whether the temperature of the exhaust flowing in the exhaust plumbing is lower than a predetermined judgment temperature. In addition, determination may be performed based on at least two conditions among this plurality of operating conditions.

As a result, even in a case of having entered a state in which it is difficult to make the engine air/fuel ratio rich such as in a case of the engine having entered an idle operating state, in a case of having entered a deceleration operating state, in a case of the fuel injection amount having become smaller than the predetermined judgment amount, or in a case of the generated torque having become smaller than the predetermined judgment value, the reduction reaction of NOx in the NOx purification catalyst can be promoted by supplying reducing gas. In addition, even in a case in which the temperature of the exhaust is lower than the predetermined judgment temperature and it becomes difficult for the reduction reaction to occur in the NOx purification catalyst, the reduction reaction of NOx in the NOx purification catalyst can be promoted by supplying reducing gas.

Moreover, although an example applying the present invention to a diesel internal combustion engine was shown in the above-mentioned embodiment, the present invention can also be applied to a gasoline internal combustion engine. Furthermore, the present invention can also be applied to an exhaust purification device such as of an engine for nautical propulsion such as an outboard motor in which the crankshaft is configured to be vertical.

**Claims**

1. An exhaust purification device of an internal combustion engine including a NOx purification catalyst that is provided in an exhaust channel of the internal combustion engine and that, with an air/fuel ratio of exhaust flowing in the exhaust channel as an exhaust air/fuel ratio, adsorbs or occludes NOx in exhaust when the exhaust air/fuel ratio is made lean, and reduces the NOx adsorbed or occluded when the exhaust air/fuel ratio is made rich, the exhaust purification device comprising:

   a fuel reformer that is provided separately from the exhaust channel, produces a reducing gas containing hydrogen and carbon monoxide by reforming fuel, and supplies the reducing gas from an upstream side in the exhaust channel of the NOx purification catalyst into the exhaust channel; and
an enrichment means for enriching the exhaust air/fuel ratio,
wherein the enrichment means enriches the exhaust air/fuel ratio by supplying reducing gas of a pressure higher than atmospheric pressure by way of the fuel reformer into the exhaust channel, in a case of one or a plurality of conditions among a plurality of operating conditions being satisfied.

2. An exhaust purification device of an internal combustion engine according to claim 1, wherein the plurality of operating conditions includes the internal combustion engine being in an idle operating state.

3. An exhaust purification device of an internal combustion engine according to claim 1 or 2, wherein the plurality of operating conditions includes the internal combustion engine being in a deceleration operating state.

4. An exhaust purification device of an internal combustion engine according any one of claims 1 to 3, wherein the plurality of operating conditions includes a fuel injection amount of the internal combustion engine being less than a predetermined judgment amount.

5. An exhaust purification device of an internal combustion engine according any one of claims 1 to 4, wherein the plurality of operating conditions includes a generated torque of the internal combustion engine being less than a predetermined judgment value.

6. An exhaust purification device of an internal combustion engine according any one of claims 1 to 5, wherein the plurality of operating conditions includes a temperature of exhaust flowing in the exhaust channel being lower than a predetermined judgment temperature.

7. An exhaust purification device of an internal combustion engine according any one of claims 1 to 6, wherein the plurality of operating conditions includes a temperature of the NOx purification catalyst being lower than a predetermined judgment temperature.

8. An exhaust purification device of an internal combustion engine according to any one of claims 1 to 7, comprising a supply interruption means for stopping a supply of reducing gas from the fuel reformer, in a case where a temperature of the NOx purification catalyst has become at least a predetermined judgment temperature while reducing gas is being supplied from the fuel reformer.

9. An exhaust purification device of an internal combustion engine according to any one of claims 1 to 8, further comprising a timing means for measuring an elapsed time from starting a supply of reducing gas by the fuel reformer, wherein the enrichment means stops the supply of reducing gas by the fuel reformer in a case where the elapsed time thus measured by the timing means has become a predetermined judgment time.

10. An exhaust purification device of an internal combustion engine according to any one of claims 1 to 9, further comprising an enrichment determination means for determining whether to enrich the exhaust air/fuel ratio based on at least one among a temperature of the NOx purification catalyst, an estimated amount of NOx adsorbed or occluded to the NOx purification catalyst, a revolution speed of the internal combustion engine, and a generated torque of the internal combustion engine.

11. An exhaust purification device of an internal combustion engine according to any one of claims 1 to 10, further comprising an intake amount reduction means for reducing an intake air amount of the internal combustion engine when the exhaust air/fuel ratio is made rich.

12. An exhaust purification device of an internal combustion engine according to any one of claims 1 to 11, further comprising an exhaust air/fuel ratio target value determination means for determining a target value of the exhaust air/fuel ratio when enriching the exhaust air/fuel, based on at least one among a temperature of the NOx purification catalyst, an estimated amount of NOx adsorbed or occluded to the NOx purification catalyst, a rich control duration, a revolution speed of the internal combustion engine, and a generated torque of the internal combustion engine, wherein the enrichment means enriches the exhaust air/fuel ratio so that the exhaust air/fuel ratio matches a target value determined by the exhaust air/fuel ratio target value determination means.

13. An exhaust purification device of an internal combustion engine according to claim 12, wherein the enrichment means adjusts at least one among a main injection amount of the internal combustion engine, a post injection amount of the internal combustion engine, an intake air amount of the internal combustion engine, and a supply amount of reducing gas supplied from the fuel reformer to the exhaust channel, so that the exhaust air/fuel ratio matches the target value determined by the exhaust air/fuel ratio target value determination means.

14. An exhaust purification device of an internal combustion engine according to any one of claims 1 to 13, wherein the fuel reformer produces reducing gas with carbon monoxide as a main component by way of a partial oxidation reaction of hydrocarbon fuel and air.

# FIG. 1

## FIG. 2

START

S1 — ENRICHMENT? (TRN > TRNTH?) — NO

YES

S2 — TLNC < TATH? — YES

NO

S3 — DETERMINE TARGET EXHAUST AIR-FUEL RATIO (NAFTV) FOR NORMAL ENRICHMENT CONTROL

S8 — DETERMINE TARGET EXHAUST AIR-FUEL RATIO (HAFTV) FOR $H_2$ ENRICHMENT CONTROL

S4 — INLET AIR AMOUNT (GA) REDUCED

S9 — INLET AIR AMOUNT (GA) REDUCED

S5 — NORMAL ENRICHMENT CONTROL EXECUTION BEGINS (AF→NAFTV)

S10 — $H_2$ ENRICHMENT CONTROL EXECUTION BEGINS (AF→HAFTV)

S11 — $H_2$ RICH TIMER (TIMH) START / NORMAL RICH TIMER (TIMN) START

S6 — TIMN = 0 ? — NO

YES

S7 — NORMAL RICH TIMER (TIMN) START

S12 — TLNC ≧ TBTH? — YES

NO

S13 — TIMH < TIMHE? — YES

NO

S14 — REDUCING GAS STOPPED / $H_2$ RICH TIMER (TIMH) RESET

S15 — TIMN < TIMNE? — YES

NO

S16 — NORMAL ENRICHMENT CONTROL STOPPED / NORMAL RICH TIMER (TIMN) RESET

END

FIG. 3

# FIG. 4

## INTERNATIONAL SEARCH REPORT

| International application No. |
|---|
| PCT/JP2008/070073 |

A. CLASSIFICATION OF SUBJECT MATTER
*F01N3/08*(2006.01)i, *B01D53/94*(2006.01)i, *F01N3/24*(2006.01)i, *F02D41/04*
(2006.01)i

According to International Patent Classification (IPC) or to both national classification and IPC

B. FIELDS SEARCHED

Minimum documentation searched (classification system followed by classification symbols)
F01N3/08, B01D53/94, F01N3/24, F02D41/04

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-234737 A  (Nissan Motor Co., Ltd.),<br>31 August, 2001 (31.08.01),<br>Par. Nos. [0006], [0127] to [0128];<br>Figs. 17, 18<br>& US 6823662 B1          & EP 1094206 A2 | 1,11,14<br>2-10,12,13 |
| X<br>Y | JP 2002-54427 A  (Toyota Central Research and<br>Development Laboratories, Inc.),<br>20 February, 2002 (20.02.02),<br>Par. No. [0060]; Fig. 4<br>(Family: none) | 1,11,14<br>2-10,12,13 |
| X<br>Y | WO 2007/008320 A2  (EXXONMOBIL RESEARCH AND<br>ENGINEERING CO.),<br>18 January, 2007 (18.01.07),<br>Figs. 3, 4<br>& US 2007/0012028 A1    & EP 1904721 A2 | 1,11,14<br>2-10,12,13 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    27 January, 2009 (27.01.09) | Date of mailing of the international search report<br>    10 February, 2009 (10.02.09) |
|---|---|
| Name and mailing address of the ISA/<br>    Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/070073

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 5-106430 A  (Toyota Central Research and Development Laboratories, Inc.),<br>27 April, 1993 (27.04.93),<br>Par. Nos. [0033] to [0065]<br>& US 5412946 A          & EP 537968 A1 | 1,11,14<br>2-10,12,13 |
| X<br>Y | JP 2002-161735 A  (Nissan Motor Co., Ltd.),<br>07 June, 2002 (07.06.02),<br>Par. Nos. [0018] to [0037]<br>& US 6845610 B2          & EP 1211394 A2 | 1,11,14<br>2-10,12,13 |
| Y | JP 7-127447 A  (Equos Research Co., Ltd.),<br>16 May, 1995 (16.05.95),<br>Par. Nos. [0010], [0019] to [0020], [0026] to [0027]<br>(Family: none) | 2-10,12,13 |
| Y | JP 2006-233837 A  (Toyota Motor Corp.),<br>07 September, 2006 (07.09.06),<br>Claim 3; Par. Nos. [0032] to [0033]<br>(Family: none) | 12,13 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2586738 B
- JP 2600492 B
- JP 3642273 B
- JP 2002089240 A

**Non-patent literature cited in the description**

- Development of NOx Storage Reduction Three-way Catalyst System. *Collective Papers of Society of Automotive Engineers of Japan,* October 1995, vol. 26 (4
- A NOx Reduction System Using Ammonia Storage-Selective Catalytic Reduction in Rich and Lean Poerations. *Aachener Kolloquium Fahrzeug- und Motorentechnik,* 2006, vol. 15, 259-270